# EUROPEAN PATENT APPLICATION

(11) **EP 4 641 090 A1**
(43) Date of publication of application: **29.10.2025**
(21) Application number: 23906959.4
(22) Date of filing: 18.12.2023
(51) Int. Cl.: F23R 3/42, F01D 25/00, F02C 7/00, F02C 7/18, F23R 3/06

(54) **COMBUSTOR FOR GAS TURBINE**

(30) Priority: 23.12.2022 JP 2022207289
(71) Applicant: KAWASAKI JUKOGYO KABUSHIKI KAISHA, Kobe-shi, Hyogo 650-8670 (JP)
(72) Inventor: OZAKI, Yoshihiko, Kobe-shi, Hyogo 650-8670 (JP)
(74) Representative: Dantz, Jan Henning
(86) International application number: PCT/JP2023/045237
(87) International publication number: WO 2024/135599

(57) **Abstract**

A combustor of a gas turbine according to one aspect of the present disclosure includes: an outside wall surrounding a combustion chamber; a liner which is located inside the outside wall, includes an inner peripheral surface facing the combustion chamber, and includes a large number of air holes on an entire surface of the liner; and a fixture which includes a head supporting the liner and attaches the liner to the outside wall such that an air passage exists between the outside wall and the liner, wherein: an axial interval between the air holes in an upstream region of the inner peripheral surface of the liner is about two times or more and about seven times or less a circumferential diameter of each air hole, the upstream region being located adjacent to the head and upstream of the head in a combustion gas flow direction; and a circumferential interval between the air holes in the upstream region is about two times or more and about seven times or less the circumferential diameter of each air hole.

## Description

### Technical Field

The present disclosure relates to a combustor of a gas turbine.

### Background Art

PTL 1 below discloses a combustor of a gas turbine in which a liner is located so as to face a combustion chamber. The liner is attached to an outside wall by using a fixture.

### Citation List

### Patent Literature

PTL 1: U.S. Patent Application Publication No. 2003/0123953, Specification

### Summary of Invention

### Technical Problem

Since a head of the fixture is exposed to the combustion chamber, heat of the combustion chamber may be transferred to the fixture through the head, and this may increase the temperature of the fixture. When taking a measure to avoid the increase in the temperature of the fixture, a simple configuration is desirable. An object of the present disclosure is to provide a combustor of a gas turbine which is simple in configuration and can suppress heat of a combustion chamber which is transferred to a fixture by which a liner is attached.

### Solution to Problem

A combustor of a gas turbine according to one aspect of the present disclosure includes: an outside wall surrounding a combustion chamber; a liner which is located inside the outside wall, includes an inner peripheral surface facing the combustion chamber, and includes a large number of air holes on an entire surface of the liner; and a fixture which includes a head supporting the liner and attaches the liner to the outside wall such that an air passage exists between the outside wall and the liner, wherein: an axial interval between the air holes in an upstream region of the inner peripheral surface of the liner is about two times or more and about seven times or less a circumferential diameter of each air hole, the upstream region being located adjacent to the head and upstream of the head in a combustion gas flow direction; and a circumferential interval between the air holes in the upstream region is about two times or more and about seven times or less the circumferential diameter of each air hole.

### Advantageous Effects of Invention

One aspect of the present disclosure can provide the combustor of the gas turbine which is simple in configuration and can suppress the heat of the combustion chamber which is transferred to the fixture by which the liner is attached.

### Brief Description of Drawings

FIG. 1 is a sectional view of a combustor.
FIG. 2 is an enlarged view showing the vicinity of a fixture of FIG. 1.
FIG. 3 is a diagram when a liner panel is viewed from a combustion chamber.
FIG. 4 is an enlarged view showing the vicinity of the fixture of FIG. 3.

### Description of Embodiments

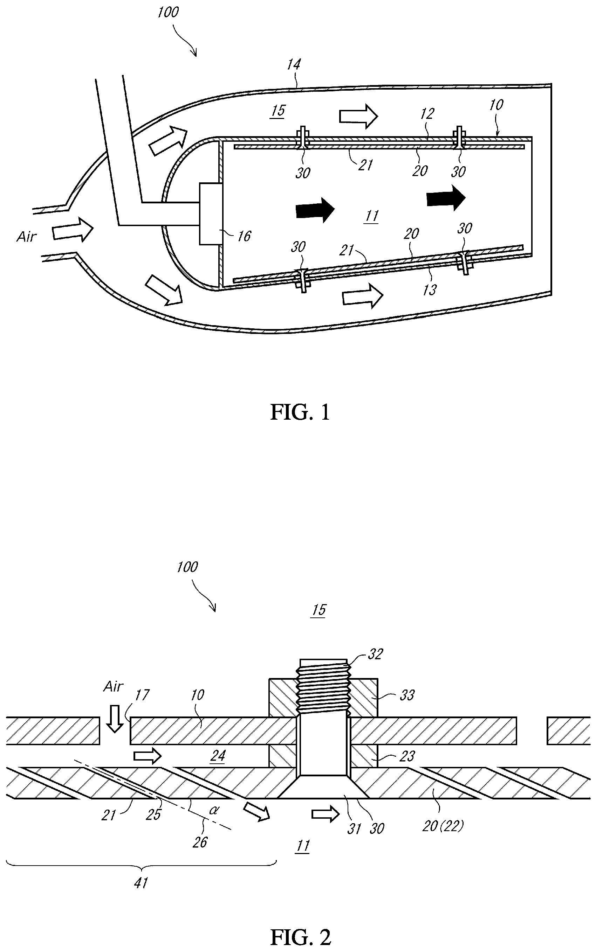

Hereinafter, a combustor 100 according to an embodiment will be described. The combustor 100 according to the present embodiment is a combustor for use in a gas turbine and is of a so-called annular type. However, the combustor 100 may be of a type, such as a can type, other than the annular type. FIG. 1 is a sectional view of a circumferential position of the combustor 100. A central axis (not shown) of the combustor 100 is located at a lower side on the paper surface of FIG. 1. A left-right direction on the paper surface of FIG. 1 corresponds to an axial direction of the combustor 100. An upper-lower direction on the paper surface of FIG. 1 corresponds to a radial direction of the combustor 100.

As shown in FIG. 1, the combustor 100 according to the present embodiment includes an outside wall 10, a liner 20, and fixtures 30. Hereinafter, these components will be described in order.

### Outside Wall

The outside wall 10 is a member that surrounds a combustion chamber 11. For example, the outside wall 10 includes a metal material. The outside wall 10 is made of metal. The combustion chamber 11 of the present embodiment is annular. A portion of the outside wall 10 which is located outside the combustion chamber 11 in the radial direction is a so-called outer shell 12, and a portion of the outside wall 10 which is located inside the combustion chamber 11 in the radial direction is a so-called inner shell 13. Moreover, the outside wall 10 is surrounded by an annular housing 14, and the outside wall 10 and the combustion chamber 11 are located in an internal space 15 of the housing 14.

A fuel injector 16 is located in the combustion chamber 11, and fuel is injected from the fuel injector 16 to the combustion chamber 11. Air is supplied to the internal space 15 of the housing 14, and part of the air supplied to the internal space 15 is supplied to the fuel injector 16. Moreover, as shown by white arrows in FIG. 1, part of the rest of the air supplied to the internal space 15 flows through a space between the outside wall 10 and the housing 14. The fuel injected from the fuel injector 16 to the combustion chamber 11 is mixed with the air and combusted. This generates a combustion gas. As shown by black arrows in FIG. 1, the generated combustion gas flows toward an outlet of the combustion chamber 11.

FIG. 2 is an enlarged view showing the vicinity of the fixture 30 of FIG. 1. A lower direction on the paper surface of FIG. 2 corresponds to a direction (hereinafter referred to as "inward") toward the combustion chamber 11, and an upper direction on the paper surface of FIG. 2 corresponds to a direction (hereinafter referred to as "outward") away from the combustion chamber 11. As shown by white arrows in FIG. 2, part of the air having flowed through the space between the outside wall 10 and the housing 14 flows through an outside wall hole 17 located on the outside wall 10 and flows into an air passage 24 located between the outside wall 10 and the liner 20. Part of the air supplied to the fuel injector 16 may flow into the air passage 24.

### Liner

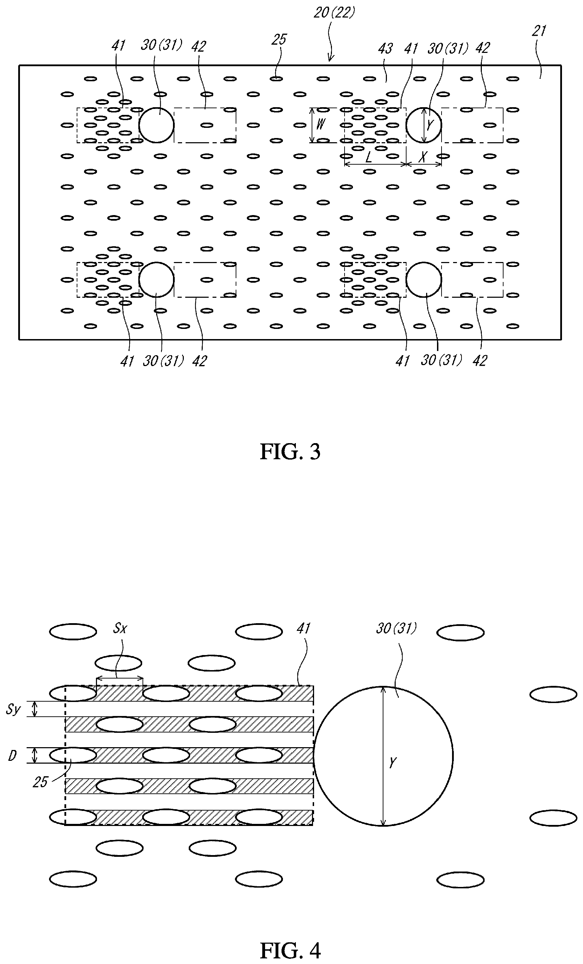

The liner 20 is a member which is located inside the outside wall 10 and includes an inner peripheral surface 21 facing the combustion chamber 11. For example, the liner 20 includes a CMC (ceramic matrix composite). The liner 20 is made of a CMC. The liner 20 of the present embodiment is attached to the outside wall 10 by the fixtures 30. The liner 20 of the present embodiment includes liner panels 22 (see FIG. 3) which are lined up in a circumferential direction so as to have a tubular shape. To be specific, the liner 20 of the present embodiment is divided into the liner panels 22. However, the liner 20 may be integrally molded without being divided into the liner panels 22.

As shown in FIG. 2, a spacer 23 is located between the outside wall 10 and the liner 20. Therefore, the air passage 24 is formed between the outside wall 10 and the liner 20. However, means for forming the air passage 24 is not limited to the spacer 23. For example, the air passage 24 may be formed by a projection located on a surface of the outside wall 10 which is opposed to the liner 20. The air having flowed through the outside wall hole 17 into the air passage 24 can cool the liner 20 by flowing through the air passage 24.

Moreover, the liner 20 includes air holes 25. The air holes 25 are located in the entire region of the liner 20 or in a specific region of the liner 20. The air holes 25 penetrate the liner 20. One end portion of each air hole 25 is open to the air passage 24, and the other end portion of each air hole 25 is open to the combustion chamber 11. Therefore, as shown by the white arrows in FIG. 2, the air flowing through the air passage 24 flows through the air holes 25 into the combustion chamber 11. Since the air flows through the air passage 24 as above, the liner 20 is further cooled. Details of the air holes 25 will be described later.

### Fixture

The fixture 30 is a member by which the liner 20 is attached to the outside wall 10. For example, the fixture 30 includes a metal material. The fixture 30 is made of metal. As shown in FIG. 2, the fixture 30 includes a head 31 and a shaft portion 32.

The head 31 is a portion supporting the liner 20. The head 31 is integrated with the shaft portion 32 and is located inside the shaft portion 32. The head 31 of the present embodiment has a truncated cone shape. The outer diameter of a portion of the head 31 which is close to the combustion chamber 11 is larger than the outer diameter of a portion of the head 31 which is close to the shaft portion 32. However, the head 31 does not have to have the truncated cone shape and may have another shape, such as a truncated pyramid shape. Since the head 31 is exposed to the combustion chamber 11, heat may be transferred from the combustion chamber 11 to the fixture 30, and this may increase the temperature of the fixture 30.

The shaft portion 32 is integrated with the head 31 and is located outside the head 31. The shaft portion 32 penetrates the liner 20, the spacer 23, and the outside wall 10. An external thread is located on a portion of the shaft portion 32 which is located outside the outside wall 10. The external thread is fastened to a nut 33 located outside the outside wall 10. When the external thread of the shaft portion 32 is fastened to the nut 33, the liner 20 can be firmly attached to the outside wall 10. However, the liner 20 may be attached to the outside wall 10 in such a manner that the liner 20 includes an internal thread, and the external thread of the shaft portion 32 is fastened to the internal thread. A method of attaching the outside wall 10 and the liner 20 by the fixture 30 may be a method other than the method using the thread.

### Details of Air Holes

Next, the details of the air holes 25 will be described. FIG. 3 is a diagram when the liner panel 22 forming the liner 20 is viewed from the combustion chamber 11. To be specific, FIG. 3 shows the inner peripheral surface 21 of the liner 20. The combustion gas flows from a left side to a right side on the paper surface of FIG. 3. The left side on the paper surface of FIG. 3 corresponds to an upstream side in a combustion gas flow direction, and the right side on the paper surface of FIG. 3 corresponds to a downstream side in the combustion gas flow direction. Hereinafter, a left-right direction on the paper surface of FIG. 3 is referred to as an "axial direction," and an upper-lower direction on the paper surface of FIG. 3 is referred to as a "circumferential direction." The combustion gas flows in the axial direction.

In the present embodiment, one liner panel 22 is attached to the outside wall 10 by using four fixtures 30. The number of fixtures 30 by which one liner panel 22 is attached to the outside wall 10 is not limited. As shown in FIG. 3, the liner 20 includes the air holes 25. Circles shown in FIG. 3 are the air holes 25. In the present embodiment, the air holes 25 are the same in size, shape, and below-described inclination angle α as each other. However, the air holes 25 may be different in size, shape, and inclination angle α from each other depending on regions where the air holes 25 are located.

A region of the inner peripheral surface 21 of the liner 20 which is located adjacent to the head 31 of each fixture 30 and upstream of the head 31 in the combustion gas flow direction is referred to as an "upstream region 41." Moreover, a region of the inner peripheral surface 21 of the liner 20 other than the "upstream region 41" is referred to as a "non-upstream region 43." In FIG. 3, portions surrounded by broken lines are the upstream regions 41. An axial dimension L of the upstream region 41 is about 0.1 times or more and ten times or less an axial dimension X of the head 31. A circumferential dimension W of the upstream region 41 is about 0.1 times or more and three times or less a circumferential dimension Y of the head 31. In the present embodiment, the upstream region 41 is rectangular. The axial dimension L of the upstream region 41 is about 1.5 times the axial dimension X of the head 31, and the circumferential dimension W of the upstream region 41 is equal to the circumferential dimension Y of the head 31. However, the upstream region 41 is not limited to the above region and may be, for example, a circular region.

FIG. 4 is an enlarged view showing the vicinity of the fixture 30 of FIG. 3. An axial interval Sx between the air holes 25 in the upstream region 41 is about two times or more and about seven times or less a circumferential diameter D of the air hole 25. Moreover, a circumferential interval Sy between the air holes 25 in the upstream region 41 is about two times or more and about seven times or less the circumferential diameter D of the air hole 25. When the axial interval Sx between the air holes 25 in the upstream region 41 and the circumferential interval Sy between the air holes 25 in the upstream region 41 are set as above, both of the cooling effect by the air holes 25 and the strength maintenance of the liner 20 can be realized.

Moreover, a total of the circumferential diameters D of the air holes 25 in the upstream region 41 may be about 0.3 times or more the circumferential dimension Y of the head 31. In FIG. 4, the above total denotes a total of circumferential dimensions of regions shown by diagonal lines. In other words, when viewed in the axial direction, a ratio of portions where the head 31 and the air holes 25 overlap each other, to the entire head 31 may be 30% or more. When the total of the circumferential diameters D of the air holes 25 in the upstream region 41 is set as above, the air having flowed through the air holes 25 easily hits the surface of the head 31, and this effectively forms an air film on the surface of the head 31. Therefore, the cooling effect of the head 31 by the air holes 25 can be further expected.

Moreover, a region of the inner peripheral surface 21 of the liner 20 other than the "upstream regions 41" is referred to as the "non-upstream region 43." A ratio of the area occupied by the air holes 25 in the upstream region 41 may be larger than a ratio of the area occupied by the air holes 25 in the non-upstream region 43. The number of air holes 25 per unit area in the upstream region 41 may be larger than the number of air holes 25 per unit area in the non-upstream region 43. The number of rows or columns of the air holes 25 per unit area in the upstream region 41 may be larger than the number of rows or columns of the air holes 25 per unit area in the non-upstream region of the inner peripheral surface 21 of the liner 20. The number of rows of the air holes 25 denotes the number of rows each including the air holes 25 lined up in the axial direction, and the number of columns of the air holes 25 denotes the number of columns each including the air holes 25 lined up in the circumferential direction.

Moreover, a region of the non-upstream region 43 which is located downstream of each head 31 in the combustion gas flow direction and corresponds to the upstream region 41 is referred to as a "downstream region 42." The above wording "corresponds to" denotes that both of these regions are the same in shape and area as each other. In FIG. 3, portions surrounded by one-dot chain lines are the downstream regions 42. The ratio of the area occupied by the air holes 25 in the upstream region 41 may be larger than a ratio of the area occupied by the air holes 25 in the downstream region 42. Moreover, the number of air holes 25 per unit area in the upstream region 41 may be larger than the number of air holes 25 per unit area in the downstream region 42. The number of rows or columns of the air holes 25 per unit area in the upstream region 41 may be larger than the number of rows or columns of the air holes 25 per unit area in the downstream region 42.

The ratio of the area occupied by the air holes 25 in the upstream region 41 may be equal to the ratio of the area occupied by the air holes 25 in the downstream region 42. The above wording "equal" denotes not only that these ratios are completely equal to each other but also that these ratios are substantially equal to each other due to a manufacturing error or the like.

Moreover, as shown in FIG. 2, a central axis 26 of each air hole 25 in at least the upstream region 41 is inclined relative to the inner peripheral surface 21 of the liner 20 such that a portion of the central axis 26 which is close to the combustion chamber 11 is located downstream of a portion of the central axis 26 which is close to the air passage 24 in the combustion gas flow direction. Furthermore, it is desirable that the inclination angle α of the central axis 26 of the air hole 25 relative to the inner peripheral surface 21 of the liner 20 be 10° or more and 30° or less. As one example, the inclination angle α of the central axis 26 of the air hole 25 relative to the inner peripheral surface 21 of the liner 20 is 20°.

Since the air holes 25 of the present embodiment are configured as above, the air having flowed through the air holes 25 in the upstream region 41 flows out to the combustion chamber 11 and flows along the inner peripheral surface 21 of the liner 20 to form the air film on the surface of the head 31 of the fixture 30. As a result, the heat transferred from the combustion chamber 11 through the head 31 to the fixture 30 can be suppressed.

In addition, since the air holes 25 are densely located in the upstream region 41, the heat of the combustion chamber 11 which is transferred to the head 31 can be suppressed, and the liner 20 can be made simple in structure. Therefore, although the combustor 100 according to the present embodiment is simple in configuration, the combustor 100 can suppress the heat of the combustion chamber which is transferred to the fixture 30.

### Conclusion

A first aspect disclosed in the present specification is a combustor of a gas turbine, the combustor including: an outside wall surrounding a combustion chamber; a liner which is located inside the outside wall, includes an inner peripheral surface facing the combustion chamber, and includes air holes; and a fixture which includes a head supporting the liner and attaches the liner to the outside wall such that an air passage exists between the outside wall and the liner, wherein: an axial interval between the air holes in an upstream region of the inner peripheral surface of the liner is about two times or more and about seven times or less a circumferential diameter of each air hole, the upstream region being located adjacent to the head and upstream of the head in a combustion gas flow direction; and a circumferential interval between the air holes in the upstream region is about two times or more and about seven times or less the circumferential diameter of each air hole.

According to this configuration, since the air holes are densely located in the upstream region, the air having flowed through the air holes forms the air film on the surface of the head, and therefore, the heat of the combustion chamber which is transferred to the head can be suppressed.

A second aspect disclosed in the present specification is the combustor according to the first aspect, wherein a total of the circumferential diameters of the air holes in the upstream region is about 0.3 times or more a circumferential dimension of the head.

According to this configuration, since the air having flowed through the air holes in the upstream region easily hits the surface of the head and effectively forms the air film, the heat of the combustion chamber which is transferred to the head can be further suppressed.

A third aspect disclosed in the present specification is a combustor of a gas turbine, the combustor including: an outside wall surrounding a combustion chamber; a liner which is located inside the outside wall, includes an inner peripheral surface facing the combustion chamber, and includes a large number of air holes on an entire surface of the liner; and a fixture which includes a head supporting the liner and attaches the liner to the outside wall such that an air passage exists between the outside wall and the liner, wherein a ratio of an area occupied by the air holes in an upstream region of the inner peripheral surface of the liner is larger than a ratio of an area occupied by the air holes in a non-upstream region of the inner peripheral surface of the liner, the upstream region being located adjacent to the head and upstream of the head in a combustion gas flow direction.

According to this configuration, since the air holes are densely located in the upstream region, the heat of the combustion chamber which is transferred to the head is suppressed. Moreover, since the air holes are not densely located in the non-upstream region, the liner can be made simple.

A fourth aspect disclosed in the present specification is the combustor according to any one of the first to third aspects, wherein: the outside wall includes metal; the fixture includes metal; and the liner includes a CMC.

According to this configuration, the liner is made of a CMC and is higher in heat resistance than the outside wall and the fixture which are made of metal. Therefore, high-temperature combustion in the combustion chamber can be performed.

A fifth aspect disclosed in the present specification is the combustor according to any one of the first to fourth aspects, wherein a ratio of an area occupied by the air holes in the upstream region is larger than a ratio of an area occupied by the air holes in a downstream region of the inner peripheral surface of the liner, the downstream region being located adjacent to the head and downstream of the head in the combustion gas flow direction.

According to this configuration, since the air holes are densely located in the upstream region, the heat of the combustion chamber which is transferred to the head is suppressed. Moreover, since the air holes are not densely located in the downstream region, the liner can be made simple.

A sixth aspect disclosed in the present specification is the combustor according to any one of the first to fifth aspects, wherein the number of air holes per unit area in the upstream region is larger than the number of air holes per unit area in the non-upstream region.

According to this configuration, the ratio of the area occupied by the air holes in the upstream region can be made larger than the ratio of the area occupied by the air holes in the non-upstream region.

A seventh aspect disclosed in the present specification is the combustor according to any one of the first to sixth aspects, wherein: the upstream region is rectangular or circular; an axial dimension of the upstream region is 1.5 times an axial dimension of the head; and a circumferential dimension of the upstream region is equal to a circumferential dimension of the head.

According to this configuration, the air film can be efficiently formed on the surface of the head from the upstream side in the combustion gas flow direction.

An eighth aspect disclosed in the present specification is the combustor according to any one of the first to seventh aspects, wherein a central axis of each air hole in the upstream region is inclined relative to the inner peripheral surface of the liner such that a portion of the central axis which is close to the combustion chamber is located downstream of a portion of the central axis which is close to the air passage in the combustion gas flow direction.

According to this configuration, the air film is easily formed on the surface of the head.

A ninth aspect disclosed in the present specification is the combustor according to claim 8, wherein an inclination angle of the central axis of the air hole in the upstream region relative to the inner peripheral surface of the liner is 10° or more and 30° or less.

According to this configuration, the air film can be more easily formed on the surface of the head.

### Reference Signs List

- 10: outside wall
- 11: combustion chamber
- 20: liner
- 21: inner peripheral surface
- 24: air passage
- 25: air hole
- 26: central axis
- 30: fixture
- 31: head
- 41: upstream region
- 42: downstream region
- 43: non-upstream region
- 100: combustor

## Claims

1. A combustor of a gas turbine,
the combustor comprising:
an outside wall surrounding a combustion chamber;
a liner which is located inside the outside wall, includes an inner peripheral surface facing the combustion chamber, and includes air holes; and
a fixture which includes a head supporting the liner and attaches the liner to the outside wall such that an air passage exists between the outside wall and the liner, wherein:
an axial interval between the air holes in an upstream region of the inner peripheral surface of the liner is about two times or more and about seven times or less a circumferential diameter of each air hole, the upstream region being located adjacent to the head and upstream of the head in a combustion gas flow direction; and
a circumferential interval between the air holes in the upstream region is about two times or more and about seven times or less the circumferential diameter of each air hole.

2. The combustor according to claim 1, wherein a total of the circumferential diameters of the air holes in the upstream region is about 0.3 times or more a circumferential dimension of the head.

3. A combustor of a gas turbine,
the combustor comprising:
an outside wall surrounding a combustion chamber;
a liner which is located inside the outside wall, includes an inner peripheral surface facing the combustion chamber, and includes air holes; and
a fixture which includes a head supporting the liner and attaches the liner to the outside wall such that an air passage exists between the outside wall and the liner, wherein
a ratio of an area occupied by the air holes in an upstream region of the inner peripheral surface of the liner is larger than a ratio of an area occupied by the air holes in a non-upstream region of the inner peripheral surface of the liner, the upstream region being located adjacent to the head and upstream of the head in a combustion gas flow direction.

4. The combustor according to any one of claims 1 to 3, wherein:
the outside wall includes metal;
the fixture includes metal; and
the liner includes a CMC.

5. The combustor according to any one of claims 1 to 3, wherein a ratio of an area occupied by the air holes in the upstream region is larger than a ratio of an area occupied by the air holes in a downstream region of the inner peripheral surface of the liner, the downstream region being located adjacent to the head and downstream of the head in the combustion gas flow direction.

6. The combustor according to any one of claims 1 to 3, wherein the number of air holes per unit area in the upstream region is larger than the number of air holes per unit area in the non-upstream region.

7. The combustor according to any one of claims 1 to 3, wherein:
the upstream region is rectangular or circular;
an axial dimension of the upstream region is about 1.5 times an axial dimension of the head; and
a circumferential dimension of the upstream region is equal to a circumferential dimension of the head.

8. The combustor according to any one of claims 1 to 3, wherein a central axis of each air hole in the upstream region is inclined relative to the inner peripheral surface of the liner such that a portion of the central axis which is close to the combustion chamber is located downstream of a portion of the central axis which is close to the air passage in the combustion gas flow direction.

9. The combustor according to claim 8, wherein an inclination angle of the central axis of the air hole in the upstream region relative to the inner peripheral surface of the liner is 10° or more and 30° or less.
